# EUROPÄISCHE PATENTSCHRIFT

(11) **EP 0 746 456 B1**
(45) Veröffentlichungstag und Bekanntmachung des Hinweises auf die Patenterteilung: **16.09.1998**
(21) Anmeldenummer: 95910409.2
(22) Anmeldetag: 22.02.1995
(51) Int. Cl.: B29C 49/04, B29C 49/32

(54) **VERFAHREN UND VORRICHTUNG ZUR HERSTELLUNG VON HOHLKÖRPERN AUS THERMOPLASTISCHEN KUNSTSTOFFEN IM BLASVERFAHREN**
METHOD AND DEVICE FOR THE MANUFACTURE OF HOLLOW ARTICLES MADE FROM THERMOPLASTIC MATERIAL BY BLOW MOULDING
PROCEDE ET DISPOSITIF PERMETTANT DE FABRIQUER DES CORPS CREUX EN MATIERE THERMOPLASTIQUE PAR MOULAGE PAR SOUFFLAGE

(30) Priorität: 23.02.1994 DE 4405743
(43) Veröffentlichungstag der Anmeldung: 11.12.1996
(73) Patentinhaber: BEKUM Maschinenfabriken GmbH, D-12107 Berlin (DE)
(72) Erfinder: MEHNERT, Gottfried, D-14195 Berlin (DE)
(74) Vertreter: Flosdorff, Jürgen, Dr.
(86) Internationale Anmeldenummer: DE9500232
(87) Internationale Veröffentlichungsnummer: WO9523060

(56) Entgegenhaltungen:
- EP-A- 0 574 684
- DE-A- 2 052 460
- PLASTVERARBEITER, Bd. 41,Nr. 1, 1.Januar 1990 Seiten 76-79, XP 000126731 'GROSSGEBINDE UND KFZ-TEILE WIRTSCHAFTLICH FERTIGEN'
- SPE JOURNAL , Bd. 18,Nr. 10, Oktober 1962 Seite 1293 J. N. SCOTT , D. L. PETERS

## Beschreibung

Die Erfindung richtet sich auf ein Verfahren zur Herstellung von Hohlkörpern aus thermoplastischen Kunststoffen im Blasverfahren, bei dem "in einer Wärme" gearbeitet wird. Bei diesem wird ein aus der Düse eines einem Extruder nachgeschalteten Schlauchkopfes kontinuierlich oder diskontinuierlich ausgepreßter, von einer vorher geöffneten Blasform beim Schließen der Formteile ergriffener warmplastischer Schlauch vom Nachschub getrennt und danach durch Einführen eines Blasmediums in das in der Form befindliche, "Vorformling" genannte Schlauchstück aufgeblasen und gegen die Formmuldenwand gepreßt. Wenn auf diese Weise Vorformlinge aus einem ausgepreßten Schlauch gebildet werden, der aus dem aus einem Extruder stammenden Material im Schlauchkopf geformt wird, spricht man - im Unterschied zum Spritzblasen - vom "Extrusionsblasen".

Die Erfindung richtet sich ferner auf eine Vorrichtung zur Durchführung des Verfahrens.

Ein viel angewendetes Verfahren dieser Art setzt sich aus folgenden Schritten zusammen:

Aus der Düse des den warmplastischen Schlauch formenden Blaskopfes wird ein Schlauch zwischen die geöffneten Teile einer Blasform ausgepreßt, und, wenn er die erforderliche Länge erreicht hat, schließt sich die Form um dieses dann den Vorformling abgebende Schlauchstück, das danach vom Nachschub getrennt wird. Die geschlossene Form mit dem Vorformling wird danach seitlich aus dieser Schlauch- oder Vorformlingsstation heraus in eine Blasstation gefahren, in der in ein in der Form offen gehaltenes Ende des Vorformlings von oben ein Blas- und Kalibrierdorn eingefahren wird.

Während der Vorformling in der geschlossenen Form in der Blasstation zum Hohlkörper ausgeformt und anschließend mittels in die Form angearbeiteter Kühlkanäle abgekühlt wird, tritt bereits ein neues Schlauchstück aus der Blaskopfdüse in der Vorformlingsstation aus. Dieser Vorgang kann zeitlich so mit der Ausformung und Abkühlung sowie Entnahme des fertig geblasenen Hohlkörpers in der Blasstation abgestimmt werden, daß ein Vorformling gerade richtiger Länge in der Vorformlingsstation vorhanden ist, wenn die geöffnete Form aus der Blasstation in die Vorformlingsstation zur Aufnahme eines neuen Vorformlings zurückgefahren ist. Dieses Verfahren wird auch "Shuttle-Verfahren" oder "Verfahren mit Obenkalibrierung" genannt.

Nach einem anderen, häufig "Untenkalibrierung" genannten Verfahren, das aber meist nur für die Herstellung größerer Hohlkörper etwa ab 30 Liter, z.B. Tanks , angewendet wird, wird mit einem in der Senkrechten der Blaskopfdüse unterhalb der Blasform liegenden Blas- und Kalibrierdorn gearbeitet. Dabei fährt entweder der unten auf jeden Fall offene schlauchförmige Vorformling über den aufrecht stehenden Blasdorn, und die Form schließt sich dann, wenn dies geschehen ist, oder die Form schließt sich erst um den Vorformling, und danach fährt der Blasdorn senkrecht aufwärts in das offene Ende ein und bläst dann den Vorformling zum Hohlkörper auf, wonach nach Abkühlung die Form wieder auseinandergefahren und der fertige Hohlkörper der dann geöffneten Form entnommen wird. Bei diesem Verfahren kann bei stillstehendem Blaskopf nur mit diskontinuierlich erzeugten Vorformlingen gearbeitet werden und mit dem Auspressen eines Schlauchstücks aus der Blaskopfdüse erst begonnen werden, wenn der vorher ausgeblasene Hohlkörper der geöffneten Form entnommen wurde.

Bei Verfahren der genannten Arten zur Herstellung von Hohlkörpern aus Kunststoff durch das Aufblasen eines Vorformlings in einer Blasform nennt man die Zeit, die von der Aufnahme eines Vorformlings in der Blasform bis zur folgenden Aufnahme eines neuen Vorformlings in der gleichen Form verstreicht, die Zykluszeit.

Es ist aus der DE-A-2052460 bekannt, für die Reduzierung der vorgenannten Zykluszeit das vorerwähnte "Shuttle-Verfahren" und das "Verfahren mit Untenkalibrierung" zu kombinieren und hierzu die Blasform mit dem von ihr aufgenommenen Vorformling mit unten liegendem und mit der Blasform bewegbaren Blasdorn zwischen einer Schlauchaufnahmestation und einer seitlich versetzt liegenden Station zu verfahren, die dann nur Entnahmestation ist, d.h. den Vorformling bereits auf dem Wege von der Schlauchstation in die Entnahmestation zum Hohlkörper auszublasen. Es stellte sich aber heraus, daß das Aufblasen des Vorformlings bereits auf dem Wege von der Schlauchaufnahmestation in die Entnahmestation allein nicht ausreicht, um bei dadurch verkürzter Zykluszeit einwandfreie und qualitativ hochwertige Hohlkörper mit einer nach "Null" tendierenden Ausschußquote herzustellen. Dies gelingt aber bei Anwendung der Erfindung mit den in den Ansprüchen definierten Mitteln.

Aufgabe der Erfindung war es, ein Verfahren zur Herstellung von Hohlkörpern aus Kunststoffen im Blasverfahren des "Shuttle-Prinzips" zu schaffen, mit dem Hohlkörper einwandfreier Qualität unter merkbarer Verkürzung der Zykluszeit gegenüber dem vorerwähnten Verfahren hergestellt werden können. Zur Aufgabe gehört ferner die Bereitstellung einer Vorrichtung zur Durchführung des Verfahrens nach der Erfindung.

Diese Aufgabe löst die Erfindung mit den in den Ansprüchen definierten Mitteln.

Das Verfahren nach der Erfindung und Einzelheiten einer Vorrichtung zur Durchführung desselben sind an einem Ausführungsbeispiel an Hand der Zeichnungen dargestellt und unter Bezugnahme auf diese nachfolgend beschrieben. Es stellen dar:
- Fig. 1: schematisch eine Blasform mit einem von ihr aufgenommenen Vorformling nebst Blas- und Kalibrierwerkzeug zur Darstellung des Verfahrens nach der Erfindung in fünf aufeinander folgenden Schritten a bis e und in verkleinertem Maßstab;
- Fig. 2: schematisch eine Aufsicht auf ein unterhalb der Auspreßdüse eines Schlauchkopfes angeordnetes Quetschwerkzeug in geöffnetem Zustand und in einem gegenüber Fig. 1 vergrößerten Maßstab;
- Fig. 3: das Quetschwerkzeug nach Fig. 2 in geschlossenem Zustand;
- Fig. 4: einen Querschnitt durch ein erfindungsgemäßes Blas- und Kalibrierwerkzeug;
- Fig. 5: ein Zeitdiagramm für das bekannte Verfahren mit sogenannter "Obenkalibrierung" und einer seitlich zur Schlauchaufnahmestation versetzten Blasstation;
- Fig. 6: ein Zeitdiagramm für den Ablauf der Stufen des Verfahrens nach der Erfindung.

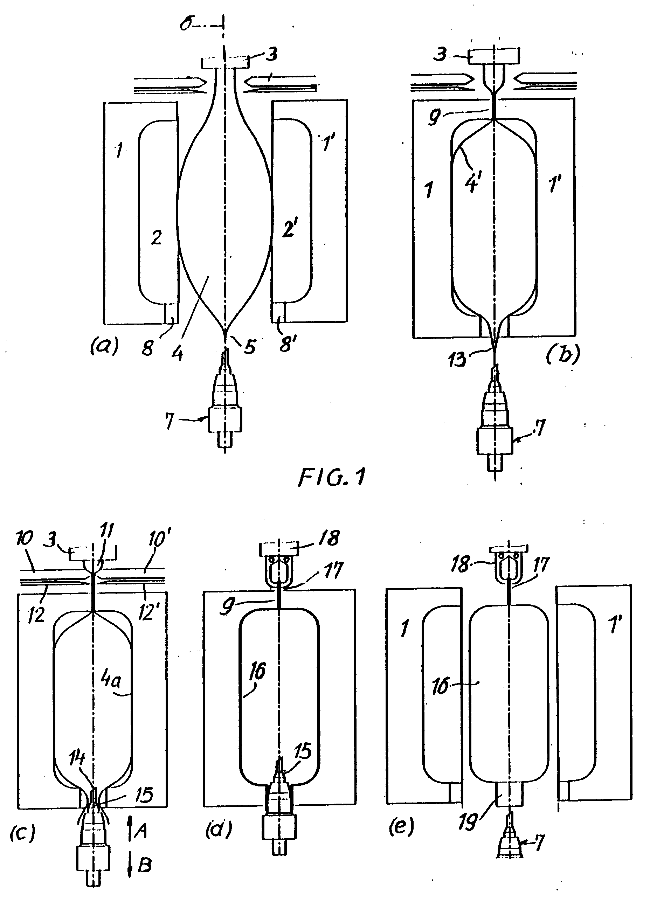

Die Fig. 1a bis 1e zeigen schematisch in fünf aufeinander folgenden Verfahrensstufen eine Blasform, einen Vorformling, das Blas- und Kalibrierwerkzeug, das das untere Vorformlingsende bildende Werkzeug, die den Vorformling vom schlauchkopfseitigen Nachschub trennende Einrichtung und ein den fertigen Hohlkörper haltendes und gegebenenfalls weiter transportierendes Element.

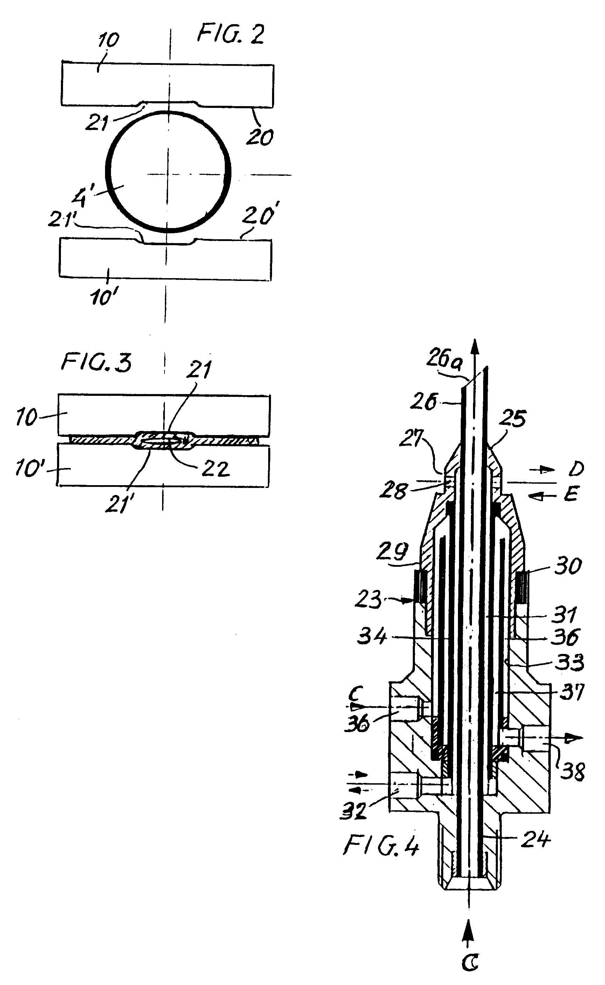

Mit 1 und 1' sind zwei Blasformhälften mit den Formnesthälften 2 und 2' bezeichnet. Diese Form 1,1' ist in der Vorformlings- oder Schlauchstation nach Fig. 1a geöffnet, d.h. die Formhälften 1 und 1' sind soweit auseinandergefahren, daß ein ausgepreßtes Schlauchstück zwischen ihnen Platz hat. Wenn die geöffnete Form nach Beendigung des Rückweges aus der Entnahmestation in die Stellung nach Fig. 1a gelangt, hat der aus der Düse eines nur angedeuteten Blaskopfes 3 ausgepreßte Schlauch bereits die für das Ergreifen beim Schließen der Form erforderliche Länge oder fast diese Länge erreicht, wobei das untere Ende 5 des Schlauches 4 dann bereits zur Bildung einer Blase 4 auf einer an Hand der Fig. 1c erläuterte Weise geschlossen ist. Unter der Blasform 1,1' liegt in der durch die Blaskopfdüse gehenden Mittelachse 6 das an Hand der Fig. 4 näher beschriebene Blas- und Kalibrierwerkzeug 7. Der Halsbereich der Blasform, d.h. der die Behälteröffnung im Zusammenwirken mit dem Blas- und Kalibrierwerkzeug ausformende Teil derselben ist mit 8 und 8' bezeichnet.

In der Schlauchaufnahmestation werden gemäß Fig. 1b die Formhälften 1 und 1' zum Formschluß zusammengefahren, wodurch der vorgeblasene Schlauch 4 die Form 4' einnimmt. Bei diesem Formschluß wird auch das im Blasformbereich liegende blasdüsenseitige Ende 9 des Schlauches zwischen den Formteilen zusammengequetscht. In das Schlauchstück 4 wird also durch einen im Blaskopf 3 vorhandenen Kanal Luft eingeführt und damit das Schlauchstück so vorgeweitet, daß es in der geschlossenen Form die Formmulde 2,2' bereits so weitgehend ausfüllt, daß es möglichst nur noch im oberen und unteren Endbereich fertig ausgeblasen werden muß. Dies wird dadurch erreicht, daß der größte Durchmesser des Schlauchstückes 4 möglichst weitgehend der größten lichten Weite der Formmulde 2,2' der geschlossenen Blasform entspricht. Mit einer voraufgeweiteten Blase zu arbeiten, die nach dem Formschluß so oder ähnlich, wie in Fig. 1b dargestellt, das Formnest bereits zu einem großen Teil ausfüllt, ist insbesondere dann zweckmäßig, wenn nicht rotationssymmetrische Hohlkörper, sondern solche hergestellt werden sollen, die am Hauptkörper seitlich versetzte Anblasungen, wie z.B. Griffe oder Henkel, aufweisen.

Gemäß Fig. 1c werden dann zwei zwischen der Blaskopfdüse 3 und der Blasformoberfläche angeordnete Quetschbalken 10,10' aufeinanderzugefahren und quetschen den Schlauchnachschub 11 zur Bildung des unteren Endes des folgenden Vorformlings direkt unterhalb der Düse 3 zusammen, der dadurch weitgehend aber nicht vollständig so geschlossen wird, daß die Einführung der Blasluft in den Vorformling problemlos geschehen kann. Gleichzeitig oder kurz danach wird unterhalb der Quetschbalken 10 das ausgepreßte und von der geschlossenen Form aufgenommene Schlauchstück 4' von dem Schlauchnachschub 11 mit einer Trennvorrichtung, z.B. Messern 12,12', abgetrennt und damit zum Vorformling 4a.

Kurz nach dem Zusammenquetschen und Abtrennen oder kurz vorher oder gleichzeitig damit wird die Bestandteil des axial in Pfeilrichtung A-B heb- und senkbaren Blas- und Kalibrierwerkzeuges 7 bildende Blasnadel 14 auf später beschriebene Weise in die vorher durch Abquetschen entstandene Lippe 13 des Schlauchendes 5 eingestochen und durch diese Blasnadel 14 das Blasmedium, in der Regel Luft, in den Vorformling eingeblasen. Durch Öffnungen in Konus 15 des Blas- und Kalibrierwerkzeuges kann dabei auch Luft seitlich gegen die Innenwand des Bereichs 5 des Vorformlings geblasen werden, der sich dadurch tulpenförmig öffnet, so daß der hierfür vorgesehene Teil des Werkzeuges 7 zur Kalibrierung der Behälteröffnung und einer Dichtfläche als oberen Abschluß dieser Öffnung leichter einfahren kann.

Das Zusammenfahren der Formhälften zum Formschluß um das ausgepreßte Schlauchstück, das Zusammenquetschen des Schlauchnachschubs, das Abtrennen des Vorformlings vom Schlauchnachschub unterhalb des Zusammenquetschens sowie das Einfahren des Blas- und Kalibrierdorns in den zusammengequetschten unteren Teil des Vorformlings geschieht gemäß den Fig. 1a bis 1c in der Schlauchaufnahmestation.

Nach Einfahren des Blas- und Kalibrierdorns in der Schlauchaufnahmestation gemäß Fig. 1c oder gleichzeitig mit diesem Vorgang wird die geschlossene Form mit dem in diese eingefahrenen Blas- und Kalibrierwerkzeug 7 aus dieser Station in eine Entnahmestation bewegt und auf diesem Wege der in der Form befindliche vorgeblasene Vorformling 4a zum Hohlkörper 16 fertig ausgeblasen (Fig. 1d). Bereits auf diesem Wege oder sowie die Form in der Entnahmestation angelangt ist, wird der zusammengequetschte Vorformlingsüberstand 17, z.B. von einer Zange 18, ergriffen, mit der er zur weiteren Abkühlung oder zum Transport in nachgeschaltete Arbeitsstationen, z.B. für die Entfernung des Überstandes 17, nach dem Öffnen der Form (Fig. 1e) bewegt werden kann. Gleichzeitig wird das Blas- und Kalibrierwerkzeug aus dem Hals 19 des Hohlkörpers 16 nach unten herausgefahren, so daß die geöffnete Form 1,1' mit dem Werkzeug 7 in die Extrudier- oder Schlauchaufnahmestation zurückgefahren und wieder einen am unteren Ende geschlossenen und vorgeblasenen Vorformling aufnehmen kann, womit ein neuer Hohlkörperfertigungszyklus beginnt.

Die Vorrichtung zur Durchführung des vorbeschriebenen Verfahrens besteht in an sich bekannter Weise aus einem Schlauchkopf, der das in einem Extruder durch Zuführung von Druck und Wärme erweichte Kunststoffmaterial zu einem warmplastisch verformbaren Schlauch ausformt und durch eine Düse 3 senkrecht nach unten auspreßt, ferner einer Blasform 1,1', die um das ausgepreßte, einen Vorformling abgebende Schlauchstück 4 geschlossen und für die Entnahme des fertig ausgeblasenen Hohlkörpers 16 geöffnet werden kann, sowie aus einem Blas- und Kalibrierwerkzeug, das von unten aufwärts in den Halsbereich der Blasform eingefahren und aus ihm herausgefahren werden kann und das zusammen mit der Blasform zwischen der Schlauchstation und der Entnahmestation verfahren wird, also an der Bewegungseinrichtung für die Blasform unterhalb derselben angebracht ist.

Ferner gehören zur Vorrichtung eine seitlich zur Schlauchstation versetzt liegende Entnahmestation, eine Einrichtung 12,12' für die Abtrennung des Vorformlings vom schlauchkopfseitigen Nachschub und eine Einrichtung 18, die den fertig ausgeblasenen Hohlkörper ergreift und abstellt oder weiteren Nachbearbeitungsstationen zuführt. Diese bekannte Vorrichtung zeichnet sich erfindungsgemäß durch das aus der Düse des Schlauchkopfes austretende Ende schließende Quetschbalken sowie ein besonderes Blas- und Kalibrierwerkzeug aus.

Hierzu ist aus Fig. 1c ersichtlich, daß nach dem Abtrennen des von der geschlossenen Form 1,1' aufgenommenen Vorformlings 4a unterhalb der Düse des Extrusionskopfes 3 für den folgenden Vorformling ein durch das Zusammenquetschen mit den Quetschbalken 12,12' entstandenes Stück 11 verbleibt. Dieses jeweils untere Ende des im Zyklus folgenden Vorformlings wird also durch die Quetschbalken 10,10' erzeugt, die in der Aufsicht und, gegenüber der Fig. 1 vergrößert und um 90° versetzt, in den Fig. 2 und 3 in geöffnetem und geschlossenem Zustand dargestellt sind.

Die Quetschbalken 10,10' weisen an ihren Innenflächen 20,20' je eine Ausnehmung 21,21' auf, die kongruent und mit ihren offenen Seiten aufeinanderzu gerichtet sind, so daß beim Zusammenfahren der Quetschbalken das Schlauchende 11 nicht ganz zusammengequetscht und d.h. an dieser Stelle nicht durch Verschweißen geschlossen wird, sondern vielmehr eine nicht zusammengeschweißte, in der Zeichnung als ein kleiner Spalt 22 gezeichnete Stelle, verbleibt. Hier kann die zum Blas- und Kalibrierwerkzeug gehörende Blasnadel einfahren, ohne daß dabei die Gefahr besteht, daß dadurch Material nach innen in den Vorformling geschoben wird oder sie an der Quetschnaht abrutscht. Der in der Zeichnung zur Verdeutlichung übertrieben breit dargestellte Schlitz 22 und damit die Weite und vor allem die Tiefe der Ausnehmung 21,21' ist so bemessen, daß aus dem blasenförmig vorgeblasenen Vorformling nur sehr wenig Luft entweichen kann und damit der vorgeblasene Vorformling nicht zusammenfallen, aber andererseits die Blasnadel ohne Materialverschiebung oder -stauchung sicher einfahren kann. Es kommt darauf an, daß das die Blase 4 durch Verschweissen des noch warmplastischen Schlauches erzeugende Zusammenquetschen durch die Balken 10,10' über einen Teil der Quetschlänge unterbleibt, auch wenn dadurch nicht ein sichtbarer Schlitz 22 entsteht.

Die das Zusammenschweißen und damit Verschließen beim Zusammenquetschen des Schlauchendes verhindernden Ausnehmungen 21,21' müssen nicht, wie bei dem dargestellten Beispiel, genau in der in der Zeichnung senkrechten Mittelebene des Schlauchstücks 4 liegen. Sie können auch, je nachdem, wo das Blas- und Kalibrierwerkzeug in den Vorformling einfahren soll, seitlich versetzt zu dieser Ebene liegen. Diese Lage ist in der Regel von der Lage der Füll- und Entleerungsöffnung des herzustellenden Hohlkörpers im Verhältnis zu dessen Hauptachse abhängig. So ist z.B. bei vielen Wasser- und Benzinkanistern die Füll- und Entleerungsöffnung auf der oberen Fläche des quaderförmigen Kanisters verhältnismäßig dicht an einer Schmalseite angebracht, und in diesem Falle muß natürlich auch das Blas- und Kalibrierwerkzeug an dieser Stelle in den vorgeblasenen und am unteren Ende geschlossenen Vorformling einfahren, weshalb auch an dieser Stelle durch entsprechend seitlich versetzt außerhalb der Hauptachse des Vorformlings liegende Ausnehmungen der Schlitz 22 bzw. der nicht verschweißte Bereich der Lippe 5 erzeugt wird. Außerdem können die Quetschbalken natürlich auch für die Herstellung von mehreren Hohlkörpern in mehreren Formnestern einer Blasform länger als dargestellt ausgeführt sein und dann mehrere Ausnehmungen 21,21' im Formnestabstand nebeneinander aufweisen.

Fig. 4 stellt ein erfindungsgemäßes Blas- und Kalibrierwerkzeug für die Vorrichtung zur Durchführung des erfindungsgemäßen Verfahrens dar. Er besteht aus dem meist aus Fertigungsgründen mehrteiligen Dornkörper 23, dessen oberer oder Kopfteil der Anformung und Kalibrierung der Öffnung (Halsbereich) des herzustellenden Hohlkörpers dient. Dieser Dornkörper wird von einem in der Hauptachse liegenden Rohr 24 durchsetzt, dessen über den Dornkopf 25 hinausragender Überstand erfindungsgemäß eine Blasnadel 26, zweckmäßig mit abgeschrägter Spitze 26a, bildet. Mit dieser Blasnadel 26 fährt der Blas- und Kalibrierdorn 7 bei seiner Aufwärtsbewegung gemäß Fig. 1c zuerst in den nicht verschweißten Bereich bzw. Spalt 22 des am unteren Ende 5 durch die Quetschbalken 10,10' verschlossenen Vorformlings ein. Durch das Rohr 24 und damit auch die Blasnadel 26 wird, veranschaulicht durch den Pfeil C, das Blasmedium, in der Regel Luft, in den Vorformling zur Aufweitung desselben bis zur Anlage an das Formnest 2,2' eingelassen.

Zusätzlich sind unterhalb der Blasnadel 26 in dem konischen Dornkopf oder den sich an diesen anschließenden zylindrischen Teil 27 Luftaustrittslöcher 28 vorgesehen, deren Achsen so liegen, daß austretende Luft in Richtung des Pfeils D seitlich oder schräg aufwärts ausströmt. Damit wird, zusammen mit der in den Durchmessern von oben nach unten zunehmenden Gestalt des Dornes erreicht, daß das Vorformlingsende im sogenannten Halsbereich 8,8' der Blasform aufgeweitet und gegen die Wand dieses Halsbereiches angelegt wird, wie in der Fig. 1c schematisch veranschaulicht. Beim Einfahren des Blas- und Kalibrierwerkzeuges 7 in den nicht verschweißten Bereich des unteren halsseitigen Endes des Vorformlings 4a kommt also zuerst die durch die Blasnadel 26 einströmende Blasluft zur Wirkung, die den vorgeblasenen und beim Zusammenfahren der Formhälften 1,1' bereits weitgehend das Formnest 2,2' ausfüllenden Vorformling fertig aufbläst. Wegen des sehr schnellen Hochfahrens des Dornes praktisch gleichzeitig wird der Halsbereich des Vorformlings durch aus den Öffnungen 28 ausströmende Luft tulpenartig vorgeformt, der beim weiteren Hochfahren des Dornkörpers durch den zylindrischen Teil 29 zwischen diesem und der Halswandung der Form ,wie man sagt, "kalibriert" wird. Durch die Stufe 30 wird schließlich in an sich bekannter Weise im Zusammenwirken mit dem entsprechend geformten "Einlauf" des Halsformteils die Dichtlippe des Halses des Hohlkörpers ausgeformt.

Damit erfolgt die Ausformung des Halses 19 des herzustellenden Hohlkörpers 16 einschließlich seines oberen Randes durch das Zusammenwirken des Drucks der Luft aus den Öffnungen 28 und Preßformen mit den Teilen 29 und 30, wodurch der sonst oft unerwünschte und insbesondere bei transparenten Hohlkörpern sichtbare Einschub von Material beim Einfahren des Dornes in den Halsbereich vermieden wird.

Die "Hilfsluft", die durch die Öffnungen 28 ausströmt, wird durch den Kanal 31 mit seitlichem Anschluß 32 eingelassen. Der Weg 32-31-28 kann in umgekehrter Reihenfolge für die sogenannte "Rückspülung" verwendet werden, mit der die zum Aufweiten des Vorformlings eingeführte und die vom Vorblasen im Vorformling sich befindliche Luft in Pfeilrichtung E aus dem Hohlkörper sozusagen "herausgespült" werden kann. Der ringförmige Luftkanal 31 wird zwischen der Außenwand des Rohres 24 und einer den Raum zwischen dieser Außenwand und der Innenwand 33 des Dornkörpers teilenden Hülse 34 geformt. Die Außenwand dieser Hülse 34 wird durch einen Kühlmittelstrom, z.B. Wasser, gekühlt, das durch den Anschluß 35 in den Ringkanal 36 einströmt und durch den mit dem Kanal 36 verbundenen Ringkanal 37 und die Bohrung 38 ausströmt.

Damit kann gekühlte Luft in den geblasenen Hohlkörper eingelassen werden, die diesen zusätzlich zu der Kühlung seiner Außenwand durch Kühlkanäle in der Blasform von innen kühlt, damit er bei der Herausnahme aus der Form schnell genügend verfestigt wird.

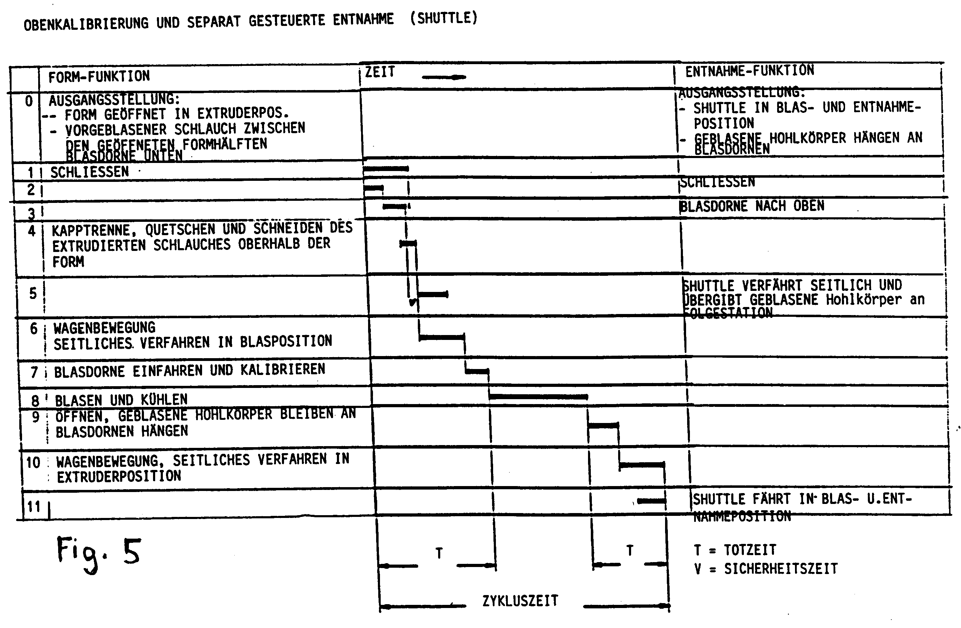

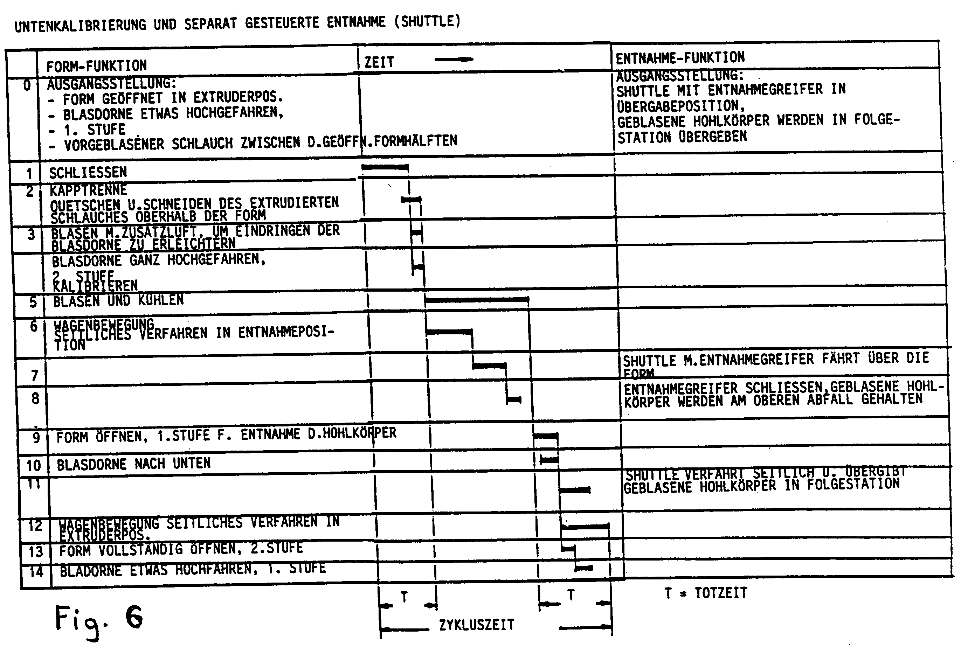

Die Fig. 5 und 6 stellen Schaubilder des Funktionsablaufes dar, wobei die Fig. 5 diesen bei der bekannten und wohl meist angewendeten "Obenkalibrierung", Fig. 6 bei dem erfindungsgemäßen Verfahren mit "Untenkalibrierung" darstellt. In beiden Fällen spricht man von einem "Shuttle-Verfahren", weil die geschlossene Blasform mit dem von ihr aufgenommenen Vorformling zwischen einer den aus der Düse des Blaskopfes ausgepreßten Vorformling aufnehmenden Station und einer seitlich versetzt liegenden Station, in der der fertige Hohlkörper der Form entnommen und diese geöffnet wird, hin- und zurückfährt. Dadurch wurde es möglich, während des Aufblasens des Vorformlings zum Hohlkörper und dessen Entnahme bereits ein neues Schlauchstück aus der Blaskopfdüse auszupressen, das, wenn die Form in die Ausgangslage zurückgefahren ist, sofort durch Schließen der Formteile aufgenommen werden kann. Die Zeit zwischen dem Formschluß um das bereits in der richtigen Länge an der Blaskopfdüse hängenden Schlauchstück und der Rückkehr der geöffneten Form in diese Position wird "Zykluszeit" genannt, die sich aus der Blas- und Kühlzeit, also der Zeit für das Ausformen des Hohlkörpers in der Blasform abhängig von Materialart, Wanddicke und Geommetrie des Hohlkörpers einerseits und den Totzeiten andererseits zusammengesetzt, wobei letztere zur eigentlichen Hohlkörperformung nichts beitragen, aber für andere Tätigkeiten als Blasen und Kühlen , z.B. Bewegung des Shuttle zwischen den Stationen sowie für das Formöffnen und -schließen, erforderlich sind.

Wenn man die Aufteilung in eine Vorformlingsaufnahmestation und eine Blasstation, also in eine Station, in der der bereits vorhandene Vorformling in die geschlossene Form gebracht und nach dem Schließen vom blaskopfseitigem Nachschub getrennt wird, und einer Station, in der er aufgeblasen und der danach geöffneten Form entnommen wird, aufgibt, und stattdessen bereits in der Vorformlingsaufnahmestation mit dem Aufblasen beginnt, und dieses während des seitlichen Verfahrens in die Entnahmestation fortsetzt, können die Totzeiten bei gleicher Zeit für das Blasen und Kühlen wesentlich verringert werden, wie die Schaubilder verdeutlichen.

## Patentansprüche

1. Verfahren zur Herstellung von Hohlköprpern (16) aus Kunststoff durch Aufblasen eines aus einem Extruder senkrecht nach unten ausgepreßten, warmplastischen Vorformlings (4a) gegen die Wände eines die Gestalt und Größe des Hohlkörpers bestimmenden Formnestes (2,2') einer geteilten Blasform (1,1'), bei dem der Vorformling in einer ersten Station von der Blasform beim Zusammenfahren der Formteile zur geschlossenen Form aufgenommen und in einer seitlich zur ersten Station versetzten zweiten Station nach dem durch Einführen eines Blasmediums in den Vorformling erfolgenden Aufblasen und Kühlung entnommen wird, wobei das Blasmedium in den von der Blasform aufgenommenen Vorformling auf dem Wege von der ersten zur zweiten Station eingeführt wird, dadurch **gekennzeichnet,** daß das den Vorformling bildende, ausgepreßte Schlauchstück (4) oberhalb der Blasform zur Bildung des unteren Endes (11) eines folgenden Vorformlings durch Zusammenquetschen verschlossen, aber über einen vorbestimmten Bereich nicht verschweißt wird und unterhalb der Verschlußebene von dem in der Form befindlichen Vorformling (4a) getrennt und daß das Blasmedium durch den nicht verschweißten Bereich in den von der Blasform aufgenommenen Vorformling durch eine Blasnadel eingeführt wird.

2. Verfahren nach dem Anspruch 1, dadurch **gekennzeichnet,** daß das Schlauchstück (4) oberhalb der einen Vorformling aufnehmenden geschlossenen Blasform zur Bildung eines unteren Endes eines folgenden Vorformlings bis auf einen schmalen, offen bleibenden Spalt (22) durch Zusammenquetschen verschweißt und verschlossen wird.

3. Verfahren nach den Ansprüchen 1 und 2, dadurch **gekennzeichnet,** daß durch das Zusammenquetschen des Schlauchstückes (4) oberhalb der den Vorformling aufnehmenden Blasform in der ersten Station ein unten geschlossener, blasenförmiger Vorformling (4a) gebildet wird, der durch Einführung von Luft in sein oberes offenes Ende bereits teilweise aufgeweitet wird.

4. Verfahren nach dem Anspruch 3, dadurch **gekennzeichnet,** daß der unten geschlossene, blasenförmige Vorformling (4a) bis auf einen größten Durchmesser vorgeblasen wird, der ganz oder weitgehend der größten lichten Weite des Formnestes (2,2') der geschlossenen Blasform entspricht.

5. Vorrichtung zur Durchführung des Verfahrens nach den Ansprüchen 1 bis 4, bestehend aus einer ersten Station mit einem Schlauchkopf (3) für die Bildung eines Vorformlings, in der dieser in einer Blasform aufgenommen und vom schlauchkopfseitigen Nachschub getrennt wird, ferner einer seitlich zur ersten Station versetzt liegenden zweiten Station für die Entnahme des fertig ausgeblasenen Hohlkörpers (16) und aus der Blasform sowie einer Einrichtung zur Bewegung der geschlossenen Blasform aus der ersten in die zweite Station und der geöffneten Blasform zurück aus der zweiten in die erste Station und einem das Blasmedium in den Vorformling einführenden Blas- und Kalibrierwerkzeug , das an der Bewegungseinrichtung für die Blasform angebracht ist, dadurch **gekennzeichnet,** daß in der ersten Station oberhalb der Blasform (1,1') Quetschbalken (10,10') vorgesehen sind, die nach der Aufnahme eines Vorformlings in der geschlossenen Blasform das untere Ende eines folgenden Vorformlings zusammenquetschen und bis auf einen vorbestimmten Bereich durch Verschweißen verschließen, und daß der das Blasmedium in den Vorformling einführende Blasteil des Blas- und Kalibrierdorns (7) eine Blasnadel ist.

6. Vorrichtung nach dem Anspruch 5, **gekennzeichnet** durch ein in der ersten Station oberhalb der Blasform (1,1') angeordnetes Quetschbalkenpaar (10,10') zur Bildung des unteren Endes eines folgenden Vorformlings, bei dem mindestens ein Balken eine in Richtung auf den anderen Quetschbalken weisende Ausnehmung (21) zur Bildung eines nicht verschweißten Bereichs oder Spaltes (22) aufweist.

7. Vorrichtung nach dem Anspruch 6, dadurch **gekennzeichnet,** daß beide Quetschbalken (10, 10') je eine kongruente Ausnehmung (21,21') gleicher Grösse aufweisen.

8. Vorrichtung nach dem Anspruch 5, dadurch **gekennzeichnet,** daß das Blas- und Kalibrierwerkzeug aus einem die Öffnung des auszublasenden Hohlkörpers formenden Dornkörper und einer Blasnadel zusammengesetzt ist und der Dornkörper (23) ein an die Zuführung des Blasmediums angeschlossenes Zentralrohr (24) aufnimmt, dessen über den Dornkopf (25) überstehender Teil die Blasnadel (36) bildet, und daß der Durchmesser des Dornkopfes (25) von seiner die Austrittsstelle des Zentralrohres bildenden Spitze allmählich auf den Durchmesser eines Kalibrierzylinders (27) erweitert ist.

9. Vorrichtung nach dem Anspruch 8, dadurch **gekennzeichnet,** daß der Raum zwischen der Innenwand (33) des Dornkörpers (23) und der Außenwand des Zentralrohres (24) durch eine Hülse (34) aufgeteilt ist und dadurch ein Ringkanal (31) mit Luftanschluß (32) entsteht, der in Öffnungen (28) unterhalb der Blasnadel (26) endet, die quer oder schräg aufwärts zur Zentralachse liegen.

10. Vorrichtung nach dem Anspruch 8, dadurch **gekennzeichnet,** daß der Raum zwischen der Innenwand (33) des Dornkörpers (23) und der Außenwand der Hülse (34) durch eine einen Teil der Höhe des Raumes einnehmenden Hülse (34) in einen Ringkanal (36) für die Zuführung eines Kühlmittels und einen Ringkanal (37) für die Abführung desselben unterteilt ist.

## Claims

1. Method for manufacturing hollow bodies (16) or a plastics material by inflating a hot-forming parison (4a), which is extruded vertically downwards from an extruder, against the walls of a mould cavity (2, 2'), which determines the shape and size of the hollow body, or a split blow mould (1, 1'), the parison being received in a first station by the blow mould as the mould parts are brought together to form a closed mould and removed in a second station, which is staggered laterally in relation to the first station, following inflation effected by introducing a blow medium into the parison and cooling, wherein the blow medium is introduced into the parison held by the blow mould on the way from the first to the second station, characterised in that the extruded tube piece (4) constituting the parison is closed by being pinched together above the blow mould to produce the lower end (11) of a subsequent parison, although is not welded over a predetermined area, and separated below the closure plane from the parison (4a) disposed in the mould, and that the blow medium is introduced through a blow needle into the parison held by the blow mould via the non-welded area.

2. Method according to claim 1, characterised in that the tube piece (4) is welded and closed by being pinched together, apart from a narrow gap (22) remaining open, above the closed blow mould holding a parison to produce a lower end of a subsequent parison.

3. Method according to claims 1 and 2, characterised in that a bubble-shaped parison (4a), which is closed at the bottom, is produced by pinching the tube piece (4) together above the blow mould holding the parison in the first station, the parison already being partly expanded by introducing air into its upper open end.

4. Method according to claim 3, characterised in that the bubble-shaped parison (4a), which is closed at the bottom, is preblown to a maximum diameter which corresponds entirely or largely to the maximum inner width of the mould cavity (2, 2') or the closed blow mould.

5. Apparatus for carrying out the method according to claims 1 to 4, consisting of a first station with an extruder head (3) for producing a parison, in which station this parison is received in a blow mould and separated from the feed material on the extruder head side, of a second station, which is staggered laterally in relation to the first station, for the removal of the finally blow-moulded hollow body (16) from the blow mould, as well as of a device for moving the closed blow mould from the first to the second station and the open blow mould back from the second to the first station, and a blow and calibration tool which introduces the blow medium into the parison and which is mounted on the device for moving the blow mould, characterised in that pinch bars (10, 10') are provided above the blow mould (1, 1') in the first station, which bars, after a parison has been received in the closed blow mould, pinch together the lower end of a subsequent parison and close it by welding, apart from a predetermined area, and that the blow part of the blow and calibration mandrel (7) which introduces the blow medium into the parison is a blow needle.

6. Apparatus according to claim 5, characterised by a pinch bar pair (10, 10') located above the blow mould (1, 1') in the first station to produce the lower and of a subsequent parison, at least one bar comprising a recess (21), which faces the other pinch bar, to produce an area or a gap (22) which is not welded.

7. Apparatus according to claim 6, characterised in that the two pinch bars (10, 10') comprise a respective congruent recess (21, 21') of the same size.

8. Apparatus according to claim 5, characterised in that the blow and calibration tool consists of a mandrel body, which forms the opening of the hollow body which is to be finally blow moulded, and of a blow needle, and the mandrel body (23) holds a central tube (24) which is connected to the blow medium supply and whose part which projects beyond the mandrel head (25) constitutes the blow needle (36), and that the diameter of the mandrel head (25) widens gradually from its tip constituting the exit point of the central tube to the diameter of a calibration cylinder (27).

9. Apparatus according to claim 8, characterised in that the space between the inner wall (33) of the mandrel body (23) and the outer wall of the central tube (24) is divided by a sleeve (34), thereby forming an annular channel (31) with an air connection (32) ending in openings (28) below the blow needle (26) which lie transversely or upwardly inclined in relation to the central axis.

10. Apparatus according to claim 8, characterised in that the space between the inner wall (33) of the mandrel body (23) and the outer wall of the central tube (24) is divided by a sleeve (34), which occupies a part of the height of the space, into an annular channel (36) for supplying a coolant and an annular channel (37) for removing the latter.

## Revendications

1. Procédé de fabrication de corps creux (16) en matière plastique en gonflant par soufflage une préforme plastique à chaud (4a), exprimée d'une extrudeuse verticalement vers le bas, contre les parois d'une cavité formant moule (2, 2'), qui détermine la forme et la grandeur du corps creux, d'un moule de soufflage divisé (1, 1'), dans lequel, dans un premier poste, on place la préforme dans le moule de soufflage lorsqu'on rapproche les parties du moule pour constituer un moule fermé et, dans un deuxième poste, décalé latéralement par rapport au premier poste, on retire la préforme après le soufflage, qui s'est effectué en introduisant un fluide soufflé dans la préforme, et après le refroidissement, le fluide soufflé étant introduit dans la préforme placée dans le moule de soufflage pendant le trajet menant du premier au deuxième poste, caractérisé en ce que l'on ferme la partie de tuyau souple (4), exprimée et formant la préforme, par écrasement au-dessus du moule de soufflage afin de former l'extrémité inférieure (11) d'une préforme suivante mais on ne la soude pas sur une zone prédéterminée et on la sépare de la préforme (4a), se trouvant dans le moule, en dessous du plan de fermeture , et en ce que l'on introduit le fluide soufflé dans la préforme, placée dans le moule de soufflage, au moyen d'une aiguille de soufflage et à travers la zone non soudée.

2. Procédé selon la revendication 1, caractérisé en ce que l'on soude et ferme par écrasement la partie de tuyau souple (4) au-dessus du moule de soufflage fermé contenant une préforme, afin de former une extrémité inférieure d'une préforme suivante, à l'exception d'une fente (22) étroite restant ouverte.

3. Procédé selon les revendications 1 et 2, caractérisé en ce que, en écrasant dans le premier poste la partie de tuyau souple (4) au-dessus du moule de soufflage contenant la préforme, on forme une préforme (4a) fermée en bas et en forme de bulle qui est déjà partiellement élargie par l'introduction d'air dans son extrémité supérieure ouverte.

4. Procédé selon la revendication 3, caractérisé en ce que l'on présouffle la préforme (4a) fermée en bas et en forme de bulle jusqu'à un diamètre maximal qui correspond totalement ou largement au diamètre interne maximal de la cavité formant moule (2, 2') du moule de soufflage fermé.

5. Dispositif pour la mise en oeuvre du procédé selon les revendications 1 à 4, constitué d'un premier poste qui comporte une tête de tuyau souple (3) pour former une préforme et dans lequel celle-ci est placée dans un moule de soufflage et est séparée de la suite du tuyau souple qui se trouve du côté de la tête de tuyau souple, en outre d'un deuxième poste décalé latéralement par rapport au premier poste et destiné au retrait du corps creux (16) complètement soufflé et formé, du moule de soufflage, ainsi que d'un dispositif pour le déplacement du moule de soufflage fermé du premier au deuxième poste et, en arrière, du moule de soufflage ouvert du deuxième au premier poste, et d'un outil de soufflage et de calibrage qui introduit le fluide soufflé dans la préforme et qui est agencé sur le dispositif de déplacement destiné au moule de soufflage, caractérisé en ce qu'il est prévu dans le premier poste, au-dessus du moule de soufflage (1, 1'), des barres d'écrasement (10, 10') qui, après le placement d'une préforme dans le moule de soufflage fermé, écrasent l'extrémité inférieure d'une préforme suivante et la ferment par soudure à l'exception d'une zone prédéterminée, et en ce que la partie de soufflage, introduisant le fluide soufflé dans la préforme, du mandrin de soufflage et de calibrage (7) est une aiguille de soufflage.

6. Dispositif selon la revendication 5, caractérisé par une paire de barres d'écrasement (10, 10'), agencée dans le premier poste au-dessus du moule de soufflage (1, 1'), pour former l'extrémité inférieure d'une préforme suivante, au moins une barre comportant un évidement (21) situé vis-à-vis de l'autre barre d'écrasement afin de former une zone ou fente (22) non soudée.

7. Dispositif selon la revendication 6, caractérisé en ce que les deux barres d'écrasement (10, 10') comportent chacune un évidement congruent (21, 21') de même grandeur.

8. Dispositif selon la revendication 5, caractérisé en ce que l'outil de soufflage et de calibrage est composé d'un corps de mandrin, constituant l'orifice du corps creux à souffler, et d'une aiguille de soufflage, et le corps de mandrin (23) loge un tube central (24) qui est raccordé au conduit d'amenée du fluide soufflé et dont la partie dépassant de la tête de mandrin (25) forme l'aiguille de soufflage (36), et en ce que le diamètre de la tête de mandrin (25) s'élargit progressivement à partir de sa pointe constituant le point de sortie du tube central pour atteindre le diamètre d'un cylindre de calibrage (27).

9. Dispositif selon la revendication 8, caractérisé en ce que l'espace entre la paroi intérieure (33) du corps de mandrin (23) et la paroi extérieure du tube central (24) est partagé par un manchon (34) et en ce qu'il se crée ainsi un canal annulaire (31) avec une prise d'air (32) qui se termine dans des orifices (20) situés au-dessous de l'aiguille de soufflage (26) et disposés transversalement ou obliquement, vers le haut, par rapport à l'axe central.

10. Dispositif selon la revendication 8, caractérisé en ce que l'espace entre la paroi intérieure (33) du corps de mandrin (23) et la paroi extérieure du tube central (24) est subdivisé par un manchon (34), occupant une partie de la hauteur de l'espace, en un canal annulaire (36) pour l'amenée d'un fluide de refroidissement et en un canal annulaire (37) pour l'évacuation de ce même fluide de refroidissement.
